# NEUE EUROPÄISCHE PATENTSCHRIFT

(11) **EP 1 936 453 B2**
(45) Veröffentlichungstag und Bekanntmachung des Hinweises auf die Entscheidung über den Einspruch: **19.02.2014**
(45) Hinweis auf die Patenterteilung: 03.03.2010
(21) Anmeldenummer: 07033527.8
(22) Anmeldetag: 20.10.2007
(51) Int. Cl.: G05B 19/042, H04L 12/40, H04L 29/12

(54) **Hausautomationsvorrichtung**
Home automation device
Dispositif domotique

(30) Priorität: 22.12.2006 DE 102006062190
(43) Veröffentlichungstag der Anmeldung: 25.06.2008
(73) Patentinhaber: Insta Elektro GmbH, 58509 Lüdenscheid (DE)
(72) Erfinder: Schulte, Johannes, 58762 Altena (DE); Hilleke, Dieter, 57413 Finnentrop (DE); Rosemann, Peter, 58091 Hagen (DE); Naurath, Dirk, 44797 Bochum (DE); Scharbatke, Kai, 58515 Lüdenscheid (DE)

(56) Entgegenhaltungen:
- WO-A2-01/35190
- US-A1- 2002 019 725
- US-A1- 2002 046 309
- US-A1- 2005 135 379
- US-A1- 2005 283 825

## Beschreibung

Die vorliegende Erfindung betrifft eine Hausautomationsvorrichtung. Derartige Vorrichtungen sind aus dem Stand der Technik allgemein bekannt, um diverse, typischerweise im Zusammenhang mit einem Gebäude vorhandenen oder benötigten Funktionalitäten koordiniert und auf der Basis elektronischer Mittel durchzuführen; neben typischen Anwendungen einer Beleuchtungssteuerung zählen zu derartigen Hausautomationsfunktionalitäten insbesondere auch Betätigungen von Beschattungseinrichtungen (typischerweise Jalousien), ferner Klima-, Heizungs-, Überwachungs- und andere Sicherheitstechnikvorrichtungen.

Im Gegensatz zu unvernetzten und damit nicht koordiniert steuerbaren Einzelgeräten, welche gerade bei weitläufigen Gebäudeinfrastrukturen nur mühsam betätigbar sind, ermöglichen Hausautomationsvorrichtungen, welche Datenübertragungsmittel zur Verbindung jeweiliger eine Hausautomationsfunktionalität an einem Betriebsort im Gebäude ermöglichende Funktionseinheiten aufweisen, das gezielte, programmgesteuerte bzw. sensorgesteuerte Durchführen der gewünschten Funktionalität im jeweils benötigten Zeitablauf. So sind insbesondere vernetzte Systeme der Sicherheitstechnik bekannt, welche etwa geeignete Sensoren (z.B. Bewegungs- und/oder Glasbruchsensoren) im Wege der Hausautomation über Steuerfunktionalität mit zugeordneten Aktoreneinheiten, etwa einer Beleuchtungsvorrichtung verbinden. Allerdings sind derartige, typischerweise auf proprietären Datenübertragungsprotokollen basierenden Hausautomationssysteme anwendungsspezifisch speziell und entsprechend unflexibel in ihrer Erweiterbarkeit (insbesondere auch auf andere, außerhalb der Sicherheitstechnik liegende Anwendungen), ferner störungsanfällig (und müssen entsprechend aufwändige Maßnahmen gegen Ausfälle oder andere Fehler im System treffen) und verursachen zum Teil beträchtlichen Einricht- und Wartungsaufwand, so dass insbesondere das (Erst-) Einrichten eines solchen bekannten Systems zur Hausautomation praktisch nicht durch einen eigentlichen Endnutzer, etwa einem Hausbewohner selbst, möglich ist.

Darüber hinaus sind aus dem Stand der Technik zahlreiche weitere, typischerweise mittels einer Bustechnologie arbeitende Hausautomationssysteme bekannt. Auch hier existieren jedoch zumeist sehr spezielle (und entsprechend unflexible) proprietäre Technologien, welche zudem in der Regel nur ein einziges Datenübertragungsmedium für die jeweils verwendeten Datenübertragungsmittel (also z.B. einen drahtgebundenen Bus) einsetzen. Unter den Bezeichnungen "KNX/EIB" gibt es zudem eine Anzahl von realisierten Hausautomationsfunktionalitäten (etwa Licht, Jalousiesteuerung, Sicherheit, Heizung usw.), wobei hier auch verschiedene Datenübertragungsmedien zur Anwendung kommen können. Allerdings sind diese Systeme höchst komplex und sind, insbesondere im Hinblick auf Flexibilität und Erweiterbarkeit, in ihrem Einsatzspektrum begrenzt. Gemeinsam ist diesen Systemen zudem eine sehr komplexe Installation und Einrichtung, so dass sich gerade im privaten Bereich der Einsatz dieser Technologien häufig verbietet.

Der prinzipiell mögliche Einsatz bekannter standardisierter Übertragungstechnologien und -protokolle, etwa auf der Basis des Internet-Protokolls (IP) und/oder einer Ethernet-Netzwerkstruktur unter Zuhilfenahme entsprechend standardisierter Teilnehmereinheiten (typischerweise PC-basiert) verbietet sich dagegen häufig bei Hausautomationsprojekten bereits dadurch, dass die Teilnehmer einer solchen Vernetzung, bedingt durch die komplexen Adress-Strukturen etwa des IP-Protokolls, aufwändig ausgestaltet und programmiert sein müssen, darüber hinaus häufig eine zentrale Adressvergabe- und/oder Routingfunktionalität in einem solchen System vorhanden sein muss, welches den erforderlichen Aufwand (sowohl in der Herstellung, als auch in der späteren Einrichtung) weiter erhöht; auch ermöglichen derartige, komplexe Ansätze in der Regel keine Realisierung von portablen, batteriebetriebenen (und auch mehrjährig mit einer Batterieladung betreibbaren) Einheiten.

Aus der DE 102 04 809 A1 ist ein Gebäudeinstallationssystem mit einem leitungsgebundenen Busnetz als Datenübertragungsmittel bekannt. Ein solches System gibt bereits erste Hinweise darauf, wie ein Hausautomationssystem ohne zentrale Einrichtungen und mit wirtschaftlich geringem Aufwand einricht- und konfigurierbar ist, allerdings ist die hier bekannte Vorrichtung -- bereits aufgrund der starren Medienbindung an leitungsgebundenen Übertragungstechnologiennur begrenzt flexibel und eignet sich insbesondere nicht für Einsatzumgebungen, die nicht oder nur begrenzt eine Installation von drahtgebundenen Übertragungsmedien zulassen.

Aus der US 2002/0019725 A1 ist eine Hausautomationsvorrichtung entnehmbar mit einer Mehrzahl von über Datenübertragungsmittel verbundenen und miteinander digitale Adress-, Befehls- und/oder Statussignale austauschenden Funktionseinheiten, die jeweils eine Aktoreneinheit zur Durchführung von mindestens einer Hausautomationsfunktionalität, insbesondere Steuerung einer Leuchtenvorrichtung oder einer Beschattungsvorrichtung, durch manuelle Betätigung und/oder elektronische Ansteuerung einrichtbar aufweisen, wobei die Funktionseinheiten jeweils eine Vernetzungseinheit aufweisen, die so ausgebildet ist, dass die Funktionseinheiten mit leitungsgebundenen und/oder drahtlosen Kommunikationsvorrichtungen zum Austausch digitaler, durch ein Datenübertragungsprotokoll definierter Daten als Datenübertragungsmittel zusammenwirken können, eine jeweilige Vernetzungseinheit einer betreffenden Funktionseinheit mit ersten digitalen Adressdaten über die Datenübertragungsmittel ansteuerbar und eine jeweilige Aktoreneinheit einer betreffenden Funktionseinheit mit zweiten digitalen Adressdaten ansteuer- und identifizierbar ist.

Darüber hinaus wird zum Stand der Technik auf die US 2004/0054747 A1, US 2005/0283825 A1 sowie die US 4 995 053 verwiesen.

Aufgabe der vorliegenden Erfindung ist es daher, eine Hausautomationsvorrichtung als System zum Verbinden einer Mehrzahl von Funktionseinheiten über Datenübertragungsmittel zu realisieren, welche im Hinblick auf ihre Einfachheit der (Hardware-technischen) Realisierung, Konfiguration und Einrichtung sowie Zuverlässigkeit und Toleranz gegen Ausfälle oder Störungen verbessert ist, darüber hinaus eine deutliche Flexibilität im Hinblick auf das einfache Hinzufügen zusätzlicher Funktionseinheiten besitzt, einem Benutzer mit geringem Aufwand das Anpassen der Gesamtvorrichtung bzw. das Einrichten neuer Funktionseinheiten mit entsprechend zugeordneter Hausautomationsfunktionalität ermöglicht, wobei es insbesondere durch die vorliegende Erfindung erreicht werden soll, dass damit die verteilt in einem Gebäude vorgesehenen, mittels der Hausautomationsvorrichtung verbundenen Funktionseinheiten gemeinsam durch Betätigung bzw. Aktivierung an einer Funktionseinheit eine Mehrzahl von Steuerreaktionen (z.B. das Aktivieren einer Leuchtenvorrichtung als Hausautomationsfunktionalität) durchführen können.

Die Aufgabe wird durch die Hausautomationsvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise weist die (geeignet an einem Einsatzort für die gewünschte Hausautomationsfunktionalität vorzusehende) Funktionseinheit zunächst eine Aktoreneinheit zur Durchführung dieser Funktionalität auf, etwa zur Leuchtenaktivierung und -deaktivierung, ferner eine im Hinblick auf die datenmäßige Ansteuerung einfach und effizient gestaltete Vernetzungseinheit: Genauer gesagt und gemäß der Erfindung ermöglicht die Vernetzungseinheit das Zusammenwirken der Mehrzahl von Funktionseinheiten (sowie, darüber hinaus, das Zusammenwirken mit weiterbildungsgemäß möglichen, selbst keine Aktoreneinheit aufweisenden Teilnehmereinheiten), indem mittels der ersten digitalen Adressdaten, die eine jeweilige Vernetzungseinheit (üblicherweise übertragungsweg- bzw. medienspezifisch) identifizieren in Verbindung mit den erfindungsgemäßen zweiten digitalen Adressdaten (welche typischerweise und in der Art einer Portadresse medien- bzw. übertragungswegunabhängig die jeweilige Aktoreneinheit mit ihrer Hausautomationsfunktionalität identifizieren) durch Wirkung der erfindungsgemäßen Adressübersetzungseinheit so behandelt werden, dass als Reaktion durch die Vernetzungseinheit über die Datenübertragungsmittel empfangene Daten die Aktoreneinheit zur Durchführung der Hausautomationsfunktionalität aktivieren, wenn die empfangenen zweiten Adressdaten der betreffenden Aktoreneinheit zugeordnet sind, wobei weiterbildungsgemäß die Vernetzungseinheit mit ihrer Adressübersetzungseinheit so ausgebildet ist, dass diese insbesondere dann, wenn eine Zuordnung zu der betreffenden Aktoreneinheit nicht erfolgt (also die empfangenen Daten nicht das Aktivieren der betreffenden Hausautomationsfunktionalität vorsehen) eine Weiterleitung dieser Daten durch die Vernetzungseinheit an weitere Funktionseinheiten, wie über die Datenübertragungsmittel angebunden, erfolgt.

Besonders bevorzugt ist es, die Vernetzungseinheit einer Funktionseinheit modulartig mit Medienmodulen aus-, auf- bzw. nachzurüsten, so dass flexibel und einfach einpassbar ein jeweils vorhandenes (drahtloses und/oder leitungs- bzw. drahtgebundenes) Medium als Datenübertragungsmittel eingesetzt werden kann; besonders günstig ist dabei die Realisierungsform, zumindest eine Funktionseinheit der Hausautomationsvorrichtung mit einer Mehrzahl von Medienmodulen auszurüsten, weiterbildungsgemäß für die gemeinsame, gleichzeitige Kommunikations- (Datenübertragungs-) Möglichkeit über entsprechend leitungsgebunden sowie drahtlos ausgebildete Datenübertragungsmittel.

Gemäß einer bevorzugten Ausführungsform der vorliegenden Erfindung ist mindestens einer der Funktionseinheiten eine Betätigungseinheit zugeordnet, welche, typischerweise in der Art einer Bedien-Tasten- bzw. Schalteranordnung (ergänzend oder alternativ: Sensorik), das Auslösen der betreffenden Hausautomationsfunktionalität einer jeweiligen Aktoreneinheit, also z.B. das Einschalten einer zugehörigen Leuchtenvorrichtung, ermöglicht. Ergänzend oder alternativ ist diese Betätigungseinheit so konfiguriert, dass sie im Zusammenwirken mit der Vernetzungseinheit der betreffenden Funktionseinheit sowie der Vernetzungseinheiten der weiteren Funktionseinheiten das (bevorzugt simultane) Aktivieren von Hausautomationsfunktionalitäten weiterer Funktionseinheiten ermöglicht, nämlich dadurch, dass erste Zuordnungsdaten für jeweilige Adressübersetzungseinheiten von an einer solchen Vernetzung beteiligten Vernetzungseinheiten erzeugt werden (während eines Einrichtens entsprechender Verbindungen, im Sinne einer Programmierung der Hausautomationsvorrichtung), und dann im laufenden Betrieb das Betätigen einer entsprechend eingerichteten Betätigungseinheit innerhalb der erfindungsgemäßen Hausautomationsvorrichtung einrichtungsgemäß das Aktivieren der jeweiligen Aktoreneinheiten mit ihrer Hausautomationsfunktionalität ermöglicht, indem geeignet Daten über die Datenübertragungsmittel versandt, von jeweiligen Vernetzungseinheiten der angebundenen Funktionseinheiten empfangen, mittels zugehöriger Adressübersetzungseinheiten interpretiert werden und dann die gewünschte Funktionalität auslösen.

Erfindungsgemäß und ergänzend zum beschriebenen Funktionsprinzip, nach welchem eine Vernetzungseinheit als Reaktion auf empfangene Daten und deren Interpretation mittels deren Adressübersetzungseinheit jeweils im Fall positiver Adressierung die Aktoreneinheit der zugehörigen Funktionseinheit aktiviert, ist die Vernetzungseinheit auch zum Weiterleiten eines die ersten sowie die zweiten Adressdaten aufweisenden Datenpakets an andere der Mehrzahl der Funktionseinheiten ausgebildet, ohne dass eine Ansteuerung bzw. Aktivierung der (eigenen) Aktoreneinheit erfolgen muss; hier würde dann die Vernetzungseinheit in der Art eines Routers eine eine Übertragung des Datenpakets ermöglichende Verbindung mit anderen Funktionseinheiten herstellen, wobei jedoch weiterbildungsgemäß die jeweiligen Funktionseinheiten so eingerichtet sind, dass sie, auf der Basis ihrer in der zugehörigen Adressübersetzungseinheit gespeicherter Zuordnungsdaten (nämlich der erfindungsgemäßen zweiten Zuordnungsdaten) eine Verknüpfung der Funktionseinheiten als Kommunikationspartner herstellt.

Konkret würden dabei wiederum zwei Betriebsmodi möglich sein: Ein erster Modus als Suche nach Weiterleitungswegen, wobei zwischen einer ersten Funktionseinheit als Datenquelle und einer zweiten Funktionseinheit als Datensenke ein Pfad über eine oder mehrere Verbindungen entlang der Datenübertragungsmittel zwischen Funktionseinheiten eingerichtet und entsprechende zweite Zuordnungsdaten in den Adressübersetzungseinheiten der jeweiligen Vernetzungseinheiten abgelegt werden, und einem zweiten Betriebsmodus, wobei auf der Basis dieser abgelegten zweiten Zuordnungsdaten dann die Weiterleitung der Datenpakete entlang des im ersten Betriebsmodus aufgefundenen bzw. bestimmten Pfades erfolgt (wobei, etwa im Falle einer unbeabsichtigten Störung oder Unterbrechung, die Vorrichtung durch Funktionalität der Vernetzungseinheiten so ausgebildet ist, dass dann wiederum im ersten Betriebsmodus ein alternativer Pfad bestimmt wird).

Zusätzlich weiterbildungsgemäß würde bei ihrer Suche nach Weiterleitungswegen die erste Funktionseinheit als Datenquelle das die ersten und zweiten digitalen Adressdaten enthaltende Adresspakt um weitere digitale Informationen ergänzen, die das weiterbildungsgemäße automatische Weiterleiten bzw. Generieren von mehrstufigen Übertragungspfaden in der oben beschriebenen Weise unterstützen; so enthält weiterbildungsgemäß das Datenpaket ein digitales Signal entsprechend der Anzahl der Übertragungsschritte des Datenpakets zwischen aufeinanderfolgenden Funktionseinheiten seit einem ersten Versenden, so dass relativ zu einem Schwellwert automatisiert der weitere Versand des betreffenden Pakets abgebrochen werden kann; weiterbildungsgemäß liegt dieser Schwellwert bei einem Wert < 15, bevorzugt < 11. Weitere mögliche Signale, welche als Übertragungsweg-Qualitäts- und/oder Abbruchkriterien verwendet werden können, sind ein Vergleich verschiedener eingehender Datenpakete (Telegramme) von verschiedenen Partnern, jedoch gleichem (Nutz-) Inhalt, wobei ein erstes (bzw. frühes) Datenpaket dann als Qualitätskriterium ausgewählt werden kann, ferner kann als Abbruch- bzw. Löschungskriterium eines Datenpakets in einer jeweiligen Vernetzungseinheit der Speicherfüllungszustand einer jeweiligen Adressübersetzungseinheit der betreffenden Funktionseinheit berücksichtigt werden.

Im Rahmen der vorliegenden Erfindung ist bevorzugt vorgesehen, dass die Vernetzungseinheit für das von ihr vorgenommene Aussenden von Datenpaketen an weitere, über die Datenübertragungsmittel angebundene Funktionseinheiten entweder unspezifische erste Adressdaten verwendet (damit, in der Art eines Broadcast, mit einem Datenpaket eine Vielzahl von Funktionseinheiten als Kommunikationspartner potentiell anspricht, wobei sich ein derartiger Betriebsmodus besonders für eine draht- bzw. leitungsgebundene Datenübertragung eignet). Ergänzend oder alternativ können die Vernetzungsmittel durch Gestaltung der ersten digitalen Adressdaten der versandten Datenpakete eine oder eine Mehrzahl von entfernten Funktionseinheiten gezielt mit ihren ersten digitalen Adressdaten ansprechen.

Besonders bevorzugt ist es zudem, bei Einsatz drahtloser, funkbasierter Datenübertragungsmittel die Vernetzungseinheit so auszugestalten, dass diese einen geeigneten aus einer Mehrzahl von kanalmäßig getrennten Übertragungsfaden einer solchen Funkstrecke auswählt (etwa nach den Kriterium einer Signalqualität) und dem Datenpaket eine den Kanal identifizierende digitale Kennung zufügt. Auch sind vorteilhaft weitere Daten bzw. Kennungen übertrag- bzw. abspeicherbar, wobei die Adress-Übersetzungseinheit (bzw. die Zuordnungsdaten-Speichereinheit) übertragungsrelevante Parameter zusätzlich aufweisen kann, etwa gewählte Antenne (bei Diversity-Betrieb), Frequenzband, Funkkanal oder Kombinationen von diesen bei Funkübertragung, wobei eine besonders bevorzugte Realisierungsform der Erfindung auch darin besteht, dass auch unterschiedliche Frequenzen oder Frequenzbänder verwendbar sind.

Während sich die vorliegende Erfindung insbesondere zur Realisierung von Hausautomationssystemen mit begrenzter Anzahl von erfindungsgemäß zusammenwirkenden Funktionseinheiten bzw. Teilnehmereinheiten eignet (vorteilhaft beträgt deren Anzahl < 255, weiter bevorzugt < 64), ist die Erweiterbarkeit und Verbindbarkeit der erfindungsgemäßen Vorrichtung mit weiteren netzbasierten Systemen (alternativ oder ergänzend: auch deren Segmentierung in einer Anzahl von über geeignete Gateway-Einheiten zusammenwirkenden Einzel- bzw. Teilnetzen) nahezu unbeschränkt und beliebig: So sieht insbesondere eine Weiterbildung der Erfindung vor, dass geeignete Gateway-Einheiten eine Anbindung der Hausautomationsvorrichtung an standardisierte Kommunikationsnetze (z.B. WLAN, ETHERNET usw.) mit standardisierten, großvolumigen Adresssystemen und Protokollen (z.B. IP) ermöglichen; eine derartige Erweiterbarkeit ist insbesondere unter dem Gesichtspunkt sinnvoll, dass, beispielsweise zum Zweck der entfernten Überwachung oder Steuerung der erfindungsgemäßen Vorrichtung, ein externer Zugriff über PCs erfolgen soll. Diese Möglichkeit ist jedoch lediglich ergänzend und nicht zwingend; vielmehr liegt, wie eingangs dargelegt, ein wesentlicher praktischer Vorteil der vorliegenden Erfindung darin, dass eine begrenzte Anzahl der zusammenwirkenden, miteinander kommunizierenden Funktionseinheiten und ein sehr einfaches, zweiteiliges Adressschema (aus erstem sowie zweitem digitalen Adressdaten) das hierfür verwendete Datenvolumen deutlich reduzieren können (typischerweise und bevorzugt auf eine maximale physikalische Datenlänge der ersten digitalen Adressdaten auf 32 Bit, der zweiten digitalen Adressdaten auf 16 Bit).

Eine weitere, bevorzugte Weiterbildung der Erfindung, welche die Datenübertragung im System (d.h. in der erfindungsgemäßen Hausautomationsvorrichtung) vereinfacht, besteht darin, dass durch Funktionalität der jeweils zusammenwirkenden Vernetzungseinheiten einer Mehrzahl von Funktionseinheiten erreicht wird, dass etwa bei erfolgter Auslösung bzw. Aktivierung einer Aktoreneinheit einer über die Datenübertragungsmittel angebundenen Funktionseinheit eine Bestätigung über das erfolgreiche Empfangen eines Datenpakets und/oder das erfolgreiche Durchführen der zugehörigen Hausautomationsfunktionalität dergestalt erfolgt, dass nicht etwa gezielt der Kommunikationspartner identifiziert wird, sondern dem ursprünglichen Befehlsgeber lediglich die Anzahl der erfolgreichen Aktionen zurückübertragen wird. Insbesondere im Fall einer Mehrzahl simultan aktivierter Hausautomationsfunktionalitäten würde dies den im Wege der Rückmeldung bzw. Quittierung notwendigen (Nutz-) Datenaufwand auf lediglich die Anzahl der erfolgreich aktivierten Aktoreneinheiten reduzieren (ohne dass jeweilige, identifizierende Adressdaten der Partner übertragen werden müssen). Gerade dieser Aspekt ist wiederum relevant für portable bzw. batteriebetriebene Geräte, da sich damit dann Betriebsleistung sinnvoll und wirksam einsparen lässt.

In praktisch bedeutsamer Weise und zur Umsetzung des der vorliegenden Erfindung zugrundeliegenden Modulgedankens ist weiterbildungsgemäß vorgesehen, die Funktionseinheiten in einem kompakten Gehäuse vorzusehen, welches zur Decken-und/oder Wandbefestigung in einem Gebäude geeignet ausgebildet ist, wobei weiter bevorzugt dieses Gehäuse so bemessen ist, dass es in (wiederum typischerweise in ihren Abmessungen standardisiert) Ausnehmungen in Wand oder Decke von Gebäuden, typischerweise zur Aufnahme von Schaltern, Steckdosen usw., eingepasst werden kann. Auf diese Weise ist insbesondere der Montage- und Installationsaufwand deutlich verringerbar, so dass eine Hardware-Installation (wie auch die nachfolgende Einrichtung des Systems) auch ohne Fachpersonal erfolgen kann. (Zwar sorgen, etwa in Deutschland, einschlägige Vorschriften dafür, dass gewisse verlegende Arbeiten im Rahmen der Installation nur durch Fachkräfte erfolgen können, insbesondere jedoch Aktivitäten im Zusammenhang mit Inbetriebnahme und/oder Parametrisierung einer Installation können in erfindungsgemäß einfacher Weise eigenständig durch die Bedienperson selbst durchgeführt werden). Insbesondere für den Fall, dass an einem (derartigen) Einsatzort keine Netzspannungsversorgung vorhanden ist, ist zudem weiterbildungsgemäß vorgesehen, eine Funktionseinheit geeignet für Batteriebetrieb mit einer im Gehäusemodul vorzusehenden Batterie auszubilden, wobei diese Variante der Erfindung weiterbildungsgemäß eine Konfiguration der zugehörigen Vernetzungseinheit so vorsieht, dass, zum Sparen von Batteriestrom, eine derartige Funktionseinheit mit ihrer Vernetzungseinheit nicht am vorbeschriebenen Weiterleitungsbetrieb zur Herstellung eines Übertragungspfades zwischen einer Mehrzahl von Funktionseinheiten teilnimmt.

Im Ergebnis ist mit der vorliegenden Erfindung in überraschend einfacher, flexibler und adaptiver Weise ein System zur Hausautomation realisierbar, welches ohne separates Steuergerät (d.h. einen Adressserver, Router od.dgl.) einricht- und betreibbar ist, vielmehr durch Funktionalität der Vernetzungseinheiten der jeweiligen Funktions- und Teilnehmereinheiten automatisiert ein- und mehrstufigen Verbindungspfade zwischen Funktionseinheiten über die Datenübertragungsmittel herstellt, im Fall des Ausfalls einer zwischengeschalteten Funktionseinheit automatisch einen alternativen Verbindungspfad generiert und einrichtet und damit neben hoher Zuverlässigkeit in der Vernetzung im einfachsten Fall keine manuellen Eingriffe eines Benutzers erfordert. Vorteilhaft lässt sich die Aktivierung von Hausautomationsfunktionalitäten, auch simultan für eine Mehrzahl von angebundenen Funktionseinheiten, einfach einrichten, wobei nach erfolgreichem Betrieb eine vereinfachte Rückmeldung über lediglich die Anzahl der teilnehmenden Funktionseinheiten an die ursprüngliche befehlsgebende Funktionseinheit erfolgt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: ein schematisches Blockschaltbild einer ersten, bevorzugten Ausführungsform der vorliegenden Erfindung;
- Fig. 2:: ein Blockschaltbild einer Vernetzungseinheit als Detailansicht aus der Übersicht der Fig. 1;
- Fig. 3:: eine Darstellung einer Hausautomationsvorrichtung mit sieben Funktions- und Teilnehmereinheiten, die leitungsgebunden und drahtlos miteinander verbunden sind, zum Verdeutlichen des Betriebsvorganges zwischen zwei Funktionseinheiten;
- Fig. 4:: eine Darstellung analog Fig. 3 zur Verdeutlichung eines alternativen Betriebsvorganges zwischen drei Funktionseinheiten in der Systemanordnung der Fig. 3.

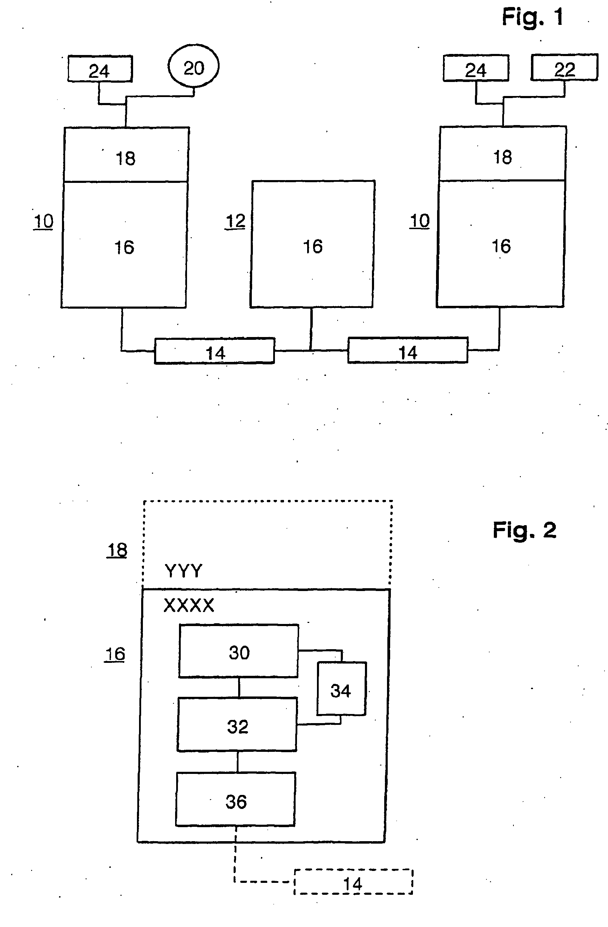

Die Fig. 1 verdeutlich in der Art eines stark vereinfachten Blockschaltbildes den logischen Aufbau der Hausautomationsvorrichtung gemäß einer ersten bevorzugten Ausführungsform der vorliegenden Erfindung. Konkret besteht das dort gezeigte System aus drei miteinander über schematisch gezeigte Datenübertragungsmittel 14 verbundenen Teilnehmern, nämlich zwei jeweils eine Vernetzungseinheit 16 sowie eine Aktoreneinheit 18 aufweisenden Funktionseinheiten 10 und einer eine Vernetzungseinheit 16, jedoch keine Aktoreneinheit 18 aufweisenden Teilnehmereinheit 12. Die schematisch gezeigten Datenübertragungsmittel 14 können dabei sowohl für drahtlose, d.h. funkbasierte Datenübertragungsmittel, als auch draht- bzw. leitungsgebunden betrieben und konfiguriert sein.

Als "Aktoreneinheit" gemäß Blockschaltbild der Fig. 1 ist dabei im Rahmen der vorliegenden Erfindung eine Einheit zu verstehen, die eine Hausautomationsfunktionalität durchführen kann, etwa eine Aktivierung einer schematisch in Fig. 1 gezeigten Beleuchtungsvorrichtung 20 durch die im Blockschaltbild links gezeigte Funktionseinheit 10, ergänzend oder alternativ kann beispielsweise durch eine Aktoreneinheit 18 eine Ansteuerung einer Rollladensteuerung 22 (in Fig. 1 rechts) oder anderer typischer Hausautomationsaggregate erfolgen. Im gezeigten Ausführungsbeispiel ist zudem den Aktoreneinheiten 18 jeweils eine Bedieneinheit 24 zugeordnet, welche typischerweise Bedientasten od.dgl. aufweisen kann, ergänzend oder alternativ im Form einer extern (z.B. über einen PC ansteuerbaren) Schnittstelle realisiert sein kann. Auch umfasst der Begriff der Aktoreneinheit das Konzept einer dieser zugeordneten Sensorik, etwa in der Art eines (ansonsten bekannten) Bewegungssensors, dessen Sensorsignal dann durch eine jeweils zugeordnete Funktionseinheit 10 weiter zu behandeln ist.

Die Fig. 2 verdeutlich weiter im Detail den funktionalstrukturellen Aufbau einer Vernetzungsseinheit 16, wobei, ebenso wie in Fig.1, das Blockschaltbild der Fig. 2 zunächst logische Funktionskomponenten mit den jeweils bildlich gezeigten Funktionsblöcken darstellt, dabei jedoch insbesondere und vorteilhaft eine Funktionseinheit 10 mechanisch-konstruktiv so ausgestaltet ist, dass diese geeignet in (typischerweise genormte) Ausnehmungen in einer Decke oder Wand eingesetzt werden kann und so Modulcharakter erhält. Nicht gezeigt in den Fig. 1 und 2 sind zudem typischerweise vorhandene Infrastruktureinheiten, insbesondere geeignete Netzspannungsversorgungen bzw. batteriebasierte Stromversorgungseinheiten.

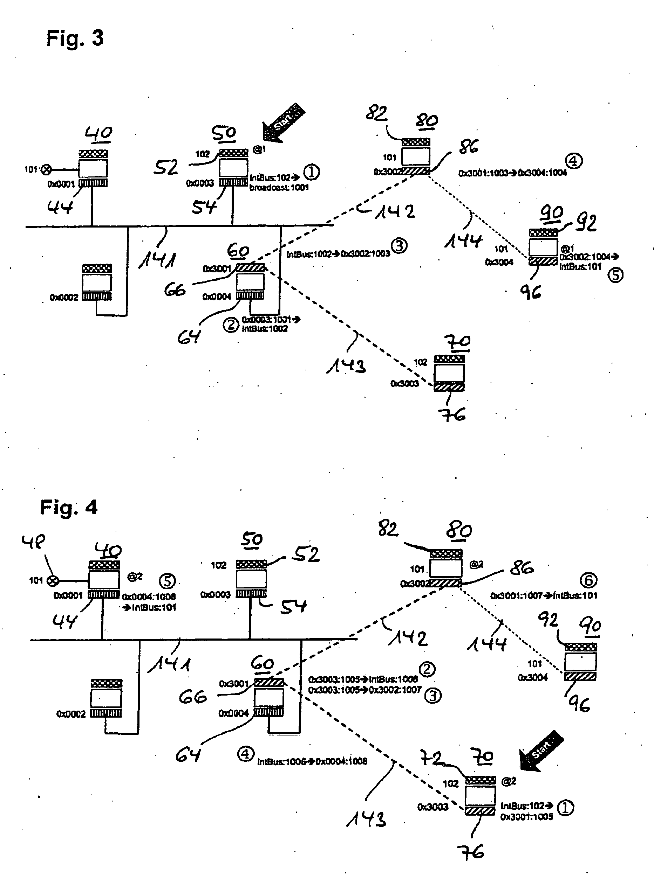

Konkret weist die Vernetzungseinheit 16, wie in Fig. 2 gezeigt, Steuermittel 30 auf, welche typischerweise mittels einer Mikrocontrollereinheit od.dgl. Ablaufsteuereinheit realisiert sind und die nachfolgend zu beschreibenden Funktionsmodi der Vernetzungseinheit 16 resp. des Gesamtsystems ermöglichen. Insbesondere wirkt dabei die Einheit 30 mit einer Adressübersetzungseinheit 32 zusammen, welche in nachfolgend zu beschreibender Weise und durch Zugriff auf erste bzw. zweite Zuordnungsdaten einer Zuordnungsdaten-Speichereinheit 34 wesentlich die Vernetzung, die Suche und Festlegung von Weiterleitungswegen im vernetzten System der Fig. 1 (ein konkretes Beispiel zeigen die Fig. 3 und 4) sowie die Reaktionsfähigkeit auf Ausfälle bzw. Unterbrechungen im System bestimmt.

Ergänzt wird der logisch-strukturelle Aufbau einer Vernetzungseinheit 16 durch ein Medienmodul 36, welches, durch die gestrichelte Verbindung in Fig. 2 angedeutet, mit den Datenübertragungsmitteln 14 zusammenwirkt und dafür sorgt, dass die Vernetzungseinheit 16 physikalisch und adressmäßig mit jeweils geeignet durch die Übertragungsmittel 14 bereitgestellten leitungs- bzw. funkgebundenen Übertragungsmedien zusammenwirken kann.

Zum Zweck der Adressierung und Adressierbarkeit ist der Vernetzungseinheit 16 eine diese (beziehungsweise die zugehörige Funktionseinheit) identifizierende Adresse in Form erster digitaler Adressdaten "XXXX" zugeordnet; in der Art einer Portadresse ist zudem die zu der Vernetzungseinheit 16 der Fig. 2 zugeordnete (lediglich gestrichelt angedeutete) Aktoreneinheit 18 über eine interne Adresse "YYY" in Form zweiter digitaler Adressdaten ansteuer- und identifizierbar. In geeignet durch die Steuermittel 30 vorgesehener und ansonsten bekannter Weise erfolgt zudem die Kommunikation innerhalb einer Funktionseinheit 10 über einen nicht näher im Detail gezeigten internen Bus.

Die anhand der Fig. 1 und 2 schematisch gezeigte Vorrichtung ist in der Lage, selbstorganisiert und ohne weitere externe Steuer- bzw. Konfigurationsmittel eingerichtet, geändert und betrieben zu werden; so ist insbesondere das System so ausgelegt, dass keine (insbesondere im vorliegenden Hausautomationskontext typischerweise zu aufwendige) zentrale Servereinheit notwendig ist.

Das System ist dabei in der Lage, im Betrieb selbstorganisierend einen Weiterleitungsweg entlang der Datenübertragungsmittel zwischen einem ersten Kommunikationspartner (Funktionseinheit oder Teilnehmereinheit als Datenquelle) und einem oder mehreren weiteren Kommunikationspartner als Datensenke zu erkennen und festzulegen, so dass in äußerst flexibler Weise und mit hoher Ausfallsicherheit ein Hausautomationssystem mit geringem Aufwand konfiguriert, geändert und betrieben werden kann.

Anhand des schematisch in den Fig. 3 und 4 gezeigten Hausautomationssystems soll dabei zunächst der Betrieb bei bereits konfiguriertem System (d.h. bei bereits eingerichteten und gespeicherten Weiterleitungswegen) beschrieben werden, wobei, auf der Basis derselben Systemeinrichtung, zwei verschiedene Betriebsvorgänge als Beispiele in Fig. 3 bzw. Fig. 4 dargestellt werden sollen. Das System der Fig. 3 bzw. 4 besteht dabei aus insgesamt sieben Kommunikationspartnern als Funktionseinheiten bzw. Teilnehmereinheiten, wobei Bezugszeichen 40, 50, 70, 80, 90 Funktionseinheiten der in Fig. 1 dargestellten Art und das Bezugszeichen 60 eine Teilnehmereinheit der in Fig. 1 dargestellten Art repräsentiert (gleichwohl nicht alle an den beschriebenen exemplarischen Kommunikationsvorgängen teilnehmen).

Gezeigt ist als Ausprägung der Datenübertragungsmittel 14 zum einen ein drahtgebundenes Bussystem 141, welches u.a. die Funktionseinheiten 40, 50, 60 verbindet, ferner sind durch gestrichelte Linien drei Funkverbindungen 142, 143, 144 vorgesehen, welche in der gezeigten Topologien die Teilnehmer- bzw. Funktionseinheiten 60, 70, 80, 90 verbinden. Die Teilnehmereinheit 60 weist dabei sowohl ein Medienmodul 64 für draht- bzw. leitungsgebundene Signalübertragung auf, als auch ein Medienmodul 66 für ein Zusammenwirken mit funkbasierten Datenübertragungsmitteln 142, 143. Dagegen besitzen die Funktionseinheiten 40, 50 lediglich Medienmodule 44 bzw. 54 zur Kommunikation über die leitungsgebundene Übertragungseinheit 141, während die Funktionseinheiten 70, 80, 90 lediglich jeweils funkbasierte Medienmodule 76, 86 bzw. 96 aufweisen. Gezeigt sind in den Fig. 3 bzw. 4 ferner mit der Endziffer 2 bezeichnete Aktoreneinheiten 42, 52, 72, 82, 92 sowie eine Beleuchtungseinheit als Aktoreneinheit 48.

Das erste Betriebsbeispiel der Fig. 3 verdeutlich, wie als Reaktion auf eine Aktivierung (z.B. manuelle Betätigung eines Schalters od.dgl.) an der Aktoreneinheit 52 der Funktionseinheit 50 eine Hausautomationsfunktionalität, also etwa eine Rollladensteuerungsfunktion, an der Aktoreneinheit 92 der Funktionseinheit 90 ausgelöst werden soll (die Datenquelle 50 bzw. Datensenke 90 sind dabei in Fig. 3 mit @1 bezeichnet).

Anhand der eingekreist dargestellten Ziffern 1 bis 5, welche in jeweiligen Zuordnungsdaten-Speichereinheiten 34 der Funktionseinheiten gespeicherten ersten bzw. zweiten Zuordnungsdaten entsprechen, läuft der in Fig. 3 dargestellte Betrieb entlang der Datenübertragungsmittel 141 bis 143 und unter Einbindung zwischengeschalteter Funktionseinheiten zwischen den Einheiten 50 und 90 wie folgt ab: Als Reaktion auf ein Aktivierungssignal an der Einheit 52 (Pfeil "Start" in Fig. 3) und durch Wirkung der Steuereinheit 30 in der Funktionseinheit 50 wird ein dadurch angestoßener interner Busvorgang (die Einheit 52 ist exemplarisch mit der Adresse "102" bezeichnet) ausgelöst und erfährt durch Wirkung der Adressübersetzungseinheit 32 der Funktionseinheit 50 eine Übersetzung in eine externe Adresse. Genauer gesagt, und wie durch die Kennung (1) verdeutlicht, erzeugt hierzu die Zugangsdaten-Speichereinheit eine Verknüpfung zwischen dem empfangenen internen Bussignal "IntBus:102" mit einem externen Adresssignal "broadcast: 1001", wobei hier der Begriff "broadcast" symbolisch eine unspezifizierte und an eine Mehrzahl von Kommunikationspartnern im Netz gerichtete Adresse und "1001" eine lokale in der Art einer Portadressierung generierte Adresse meint.

Neben anderen an die drahtgebundenen Datenübertragungsmittel 141 angebundenen Funktionseinheiten empfängt die Teilnehmereinheit 60 über ihr Medienmodul 64 dieses Adresssignal (wobei, zur Vereinfachung der Darstellung, die mit einem solchen Datenpaket zusätzlich verknüpften inhalts- bzw. Nutzdaten nicht im Detail gezeigt sind) und setzt in der der Teilnehmereinheit 60 zugeordneten Adressübersetzungseinheit 32 bzw. gemäß zugeordnetem inhalt der Zuordnungsdaten-Speichereinheit 34 das empfangene Adresssignal 0x0003:1001 (0x0003 entspricht dabei der physikalischen Adresse der Funktionseinheit 50 bzw. dessen Medienmoduls 54) und setz dieses in ein internes Bus-Adressensignal um (IntBus:1002, s. Markierung (2)). In der gezeigten Anordnung besitzt die Einheit 60 den Charakter einer Teilnehmereinheit mit zwei Medienmodulen, jedoch ohne eigene Aktoreneinheit, und fungiert als Brücke zu funkbasierten, drahtlosen Übertragungsmitteln 142, 143: Entsprechend erfolgt in der Teilnehmereinheit 60 eine weitere Adressübersetzung (Kennzeichnung (3)), welche das interne Bussignal "IntBus:1002" (das zweite (Port-) Adresssignal 1002 wurde im Beispiel durch einfaches Weiterzählen aus dem empfangenen Portsignal 1001 willkürlich erzeugt) in ein nach außen gerichtetes, die Funktionseinheit 80 (mit ihrer physikalischen Netzadresse 0x3002) adressierendes Adresssignal umsetzt (Kennzeichnung (3)).

Die Funktionseinheit 80 mit ihrem funkgebundenen Medienmodul 86 empfängt dieses so adressierte Datenpaket, stellt mittels ihrer Adressübersetzungseinheit und Zuordnungsdaten-Speichereinheit fest, dass die Einheit 80 nicht der Empfänger des mit dem Datenpaket gegebenen Befehls ist, vielmehr dieses gemäß Zuordnungsdaten (Kennung (4)) an die Funktionseinheit 90 weiter zu leiten ist. Dies erfolgt wiederum durch Wirkung des funkgebundenen Medienmoduls 86; das über die Datenüberdatenstrecke 144 übertragene Paketsignal geht in der Funktionseinheit 90 ein, wird dort vom Medienmodul 96 empfangen und umgesetzt, und die Adressübersetzungseinheit bzw. Zuordnungsdaten-Speichereinheit der Funktionseinheit 90 erzeugen gemäß dem vorhandenen Eintrag (Zuordnungsdaten an Kennung (5)) aus dem eingehenden Signal 0x3002:1004 (bei welchem wiederum 0x3002 die Absenderadresse der Funktionseinheit 80 und 1004 eine weitere Portadresse bedeutet) ein internes Bussignal zur Ansteuerung einer nicht näher im Detail gezeigten Rollladensteuerungsfunktionalität der Adresse 101.

Mithin bewirkt ein Auslösen eines Startvorgangs an der Funktionseinheit 50 eine Reaktion an der Funktionseinheit 90, wobei, in der gezeigten Weise, die Teilnehmereinheit 60 sowie die Funktionseinheit 80 an der Kommunikation mitwirken und die jeweiligen Zuordnungsdaten, in der Art von Einträgen in Routingtabellen, den für diese Funktionalität benutzten (voreingestellten) Pfad beschreiben.

Die Fig. 4 verdeutlicht einen alternativen Betriebsmodus in der bereits im Zusammenhang mit Fig. 3 dargestellten Vorrichtung als Hausautomationssystem. Hier soll angenommen werden, dass durch Aktivierung bzw. Betätigung der Funktionseinheit 70 (Pfeil Start) zwei Kommunikationspartner gleichzeitig angesprochen und mit ihrer jeweiligen Aktorik aktiviert werden sollen, zum einen die Funktionseinheit 40, zum anderen die Funktionseinheit 80 (Quelle bzw. Senke werden hier mit @2 bezeichnet). In analoger Weise zum vorbeschriebenen Beispiel wird in der Funktionseinheit 70 bei Aktivierung der Aktoreneinheit 72 ein internes Bussignal der Adresse 102 umgesetzt in ein an die Teilnehmereinheit 60 adressiertes Signal 0x3001:1005, wobei 0x3001 die physikalische Adresse der Einheit 60 im Netz darstellt und die "1005" wiederum in der Art einer Portadressierung eingerichtet ist; im Gegensatz zum Ausführungsbeispiel der Fig. 3, an welchem in der Art eines Broadcast eine Mehrzahl von Partnern adressiert wurden, ergeht hier über das funkgebundene Medium 143 eine unmittelbare direkte Adressierung eines Partners, hier der Einheit 60.

Die Teilnehmereinheit 60, mittels ihrer Einträge in der zugehörigen Zuordnungs-Datenspeichereinheit (Kennungen (2) und (3)) bewirkt eine Weiterleitungsfunktionalität in mehrere Richtungen. Zum einen, entsprechend dem ersten Routingeintrag zur Einheit 66, erfolgt eine Adressierung auf den internen Bus in Richtung auf das drahtgebundene Medienmodul 64 der Funktionseinheit 60, mit anderen Worten, das Paar von Medienmodulen 66, 64 erfährt durch diese Adressierung einen Medienwechsel. Der weitere zugeordnete Datensatz der Zuordnungsdaten verweist dann auf die Adresse 0x0004 (mit der zugeordneten Portadresse 1008) entsprechend Kennzeichnung (4), mit der Wirkung, dass über die drahtgebundenen Datenübertragungsmittel 141 die Funktionseinheit 40 (welche einen korrespondierenden Satz Zuordnungsdaten (5) in der zugehörigen, als Routingtabelle wirkenden Speichereinheit aufweist) gesendet wird, bevorzugt in der Art eines Broadcast und damit an alle mit den Mitteln 141 verbundenen Einheiten gerichtet.

Der zweite der Einheit 66 zugeordnete Tabelleneintrag (3) verweist dagegen auf einen drahtlos angebundenen Kommunikationspartner; hier enthält der Datensatz konkret die Empfangsadresse 0x3002 (mit Portadresse 1007) und spricht damit über die Datenübertragungsmittel 142 die Funktionseinheit 80 an. Hier erledigt auch die für drahtlose Datenübertragung eingerichtete Einheit 66 den Transfer, eine interne Umsetzung wie im Fall der drahtgebundenen Weiterleitung ist nicht notwendig.

Die jeweils als Datensenken bestimmten Funktionseinheiten 40 bzw. 80 besitzen dann geeignete (erste) Zuordnungsdaten als Tabellen-Datensatzeinträge (5) bzw. (6), nämlich dergestalt, dass als Reaktion auf ein von 0x0004 eingehendes Datenpaket die Funktionseinheit 40 eine Umsetzung auf den internen Bus vornimmt und dort die interne Adresse 101, im dargestellten Ausführungsbeispiel die Beleuchtungsvorrichtung 48, adressiert, so dass hier eine Aktivierung erfolgen kann. Im Fall der Datensenke 80 enthält der Zuordnungsdaten-Tabelleneintrag (6) für die Empfangsadresse 0x3001 (entsprechend der Funktionseinheit 16, dort insbesondere dessen Medienmodul 66) eine Zuordnung auf den internen Bus und dort ein nicht näher bezeichnetes, als 101 zu adressierendes Aggregat. Im Ergebnis führt dies dazu, dass als Reaktion auf eine Aktivierung der Einheit 72 im Rahmen der Funktionseinheit 70 durch die beschriebene, zweifach verzweigte Weiterleitung eine Reaktion sowohl an der Funktionseinheit 40, als auch an der Funktionseinheit 80 bewirkt werden kann.

Die so beschriebenen Ausführungsbeispiele sind dabei bewusst allgemein gehalten; die Aktoreneinheit kann dabei jeweils eine (auswählbare) Vielzahl von möglichen aktiven oder passiven Funktionalitäten realisieren, insbesondere als auch eine Sensorfunktionalität (also etwa in Form eines Bewegungsmelders) dann benutzt werden kann, um etwa die Aktivierung zu realisieren.

Aus den anhand der Fig. 3 bzw. 4 beschriebenen Ausführungsbeispielen ergibt sich damit, dass zwischen einer Datenquelle (als Funktions- und/oder Teilnehmereinheit) und einer entsprechenden Datensenke die Signalweiterleitung entsprechend der Einträge (Zuordnungsdaten) in den jeweiligen Zuordnungsdaten-Datenspeichereinheiten und durch Wirkung der jeweils in den einzelnen Vernetzungseinheiten vorgesehenen Adressübersetzungseinheit erfolgt. In den nicht näher gezeigten ist darüber hinaus, dass auch ein Rückmelde- bzw. Bestätigungsbetrieb erfolgt, wobei vorteilhaft und weiterbildungsgemäß die Rückmeldung mit der Anzahl der auf den jeweiligen Weiterleitungswegen (Pfaden) erreichten zugeordneten Funktionseinheiten als Datensenken erfolgt. Konkret würde dies, beispielsweise im Betriebsbeispiel der Fig. 4, dann so geschehen, dass die Einheit 60 jeweils ein Quittiersignal der Einheiten 40 bzw. 80 als Datensenken des Betriebsbeispiels empfängt (und auch, da die Einheit 60 am Routingbetrieb beteiligt war, zwei Quittiersignale erwartet) und daraufhin ein Bestätigungs-Datenpaket zurück an die Einheit 70 als ursprüngliche Datenquelle dieses Betriebsbeispiels sendet, welches als Nutzdaten die Zählinformation 2 (entsprechend der Summe der beiden durch die Einheit 60 empfangenen positiven Quittiersignale der Einheiten 40 bzw. 80) enthält. Ermöglicht wird diese im Ergebnis effiziente, schnelle und energiesparende Form der Quittierung durch Funktionalität der jeweiligen Vernetzungseinheiten der Funktions- bzw. Teilnehmereinheiten 40, 60, 80.

Vorteilhaft ist ferner vorgesehen, dass jede Vernetzungseinheit, insbesondere jedoch das Medienmodul einer Datenquelle, die Dauer eines Übertragungsvorganges erfasst, so dass bei einer Überschreitung einer maximal zulässigen Dauer die Weiterleitung als fehlgeschlagen festgestellt wird und aktiv und selbst-koordinierend neue Weiterleitungswege gesucht werden.

Datensenken (also über das Netz angesprochene Funktionseinheiten), die korrekt ein Datenpaket erhalten, versenden allgemein eine Rückmeldung beispielsweise mit einem Zählwert 1 an einen jeweiligen Vorgänger des beschriebenen Weiterleitungsweges. Funktionseinheiten entlang des Weiterleitungsweges, die eine solche Rückmeldung (oder mehrere) erhalten, summieren die erhaltenen Zählwerte. Sobald Rückmeldungen von jeweils allen Nachfolgern der festgelegten Weiterleitungswege erhalten sind, werden Rückmeldungen mit den jeweils ermittelten Summen als Zählwert wiederum an jeweilige Vorgänge entlang des festgelegten Weiterleitungsweges gesandt, wie vorstehend für die Einheit 60 beschrieben. Für den Fall, dass ein solcher Kommunikationspartner die Datenquelle ist (also die den ursprünglichen Vorgang veranlassende Funktionseinheit), vergleicht diese die ermittelte bzw. erhaltene Summe mit der bei ihr gespeicherten Anzahl von zugeordneten Datensenken. Falls diese Zahl übereinstimmt, gilt die beabsichtigte Datenweiterleitung als erfolgreich abgeschlossen, ansonsten wird eine Suche nach Weiterleitungswegen ausgelöst bzw. im Wiederholungsfall der Vorgang endgültig abgebrochen.

Im weiteren erfolgt noch eine kurze Beschreibung der Suche nach Weiterleitungswegen im System. So legt die Datenquelle Daten zum Suchvorgang bei der Einrichtung des Weiterleitungspfades in seinem Speicher ab; diese enthalten einen Zeitstempel zur Feststellung einer Vorgangsdauer, Merker für die Weiterleitung an andere Geräte sowie ein verwendetes Kriterium des Weiterleitungsweges, ferner einen Schrittzähler für die Anzahl der Weiterleitungen (d.h. Übertragungen zwischen aufeinanderfolgenden Funktionseinheiten) sowie eine eigene Gerätekennung als Vorgänger in der Kette des Weiterleitungsweges. Ferner sendet die Funktionseinheit als Datenquelle ein Signal aus, welches für alle Empfänger erkennbar Daten darüber enthält, dass Weiterleitungswege gesucht werden sollen, ferner ein Kriterium zur Erkennung durch eine Datensenke als gültiger Weiterleitungsweg, ferner einen Schrittzähler für Weiterleitungen, eine Bewertung der Eignung als Weiterleitungsweg sowie eine Kennung, die bei späterer Datenweiterleitung zur Identifikation des Weiterleitungsweges verwendet werden soll.

Dieses Signal wird gewöhnlich an alle direkt über angeschlossene Datenübertragungsmittel erreichbare weitere Funktionseinheiten bzw. Teilnehmereinheiten gesendet und durch diese empfangen.

Wird eine anhand des Zeitstempels ermittelbar maximal zulässige Dauer überschritten, so wird der Vorgang abgeschlossen, und die Daten werden aus dem Speicher entfernt. Die Datenquelle kann danach die aufgefundenen Weiterleitungswege zur Signalweiterleitung (Fig. 3, Fig. 4 als Beispiele) nutzen.

Funktions- bzw. Teilnehmereinheiten, die ein Suchvorgangssignal empfangen und für Weiterleitungen ausgewählt sind, überprüfen ein empfangenes Schrittzählerdatum auf einen zulässigen Grenzwert; ist dieser überschritten, nimmt das betreffende Gerät nicht mehr an der Weiterleitung teil, so dass dies als Abbruchkriterium bei der Weiterleitung des Suchvorganges wirkt. Ansonsten würde die betreffende Einheit (ebenso wie die dem betreffenden Suchvorgang zugrundeliegende Datenquelle) Daten zum Suchvorgang im Speicher ablegen, wobei der Schrittzähler für Weiterleitungen weitergezählt wird, eine Bewertung der Eignung als Weiterleitungsweg neu erfolgt und der Sender des empfangenen Signals als Vorgänger des Weiterleitungsweges eingesetzt wird (insoweit also entsprechende Zuordnungsdaten geschrieben und gespeichert werden). Die beschriebene Neubewertung als Eignung für einen Weiterleitungsweg erfolgt in ansonsten bekannter Weise auf der Basis verschiedener Größen, eingeschlossen empfangene Signalqualität sowie verfügbare (Rest-) Speichergröße auf einer entsprechenden Einheit. Anschließend erfolgt eine Weiterleitung des Signals an weitere Partner.

Enthält diejenige Einheit ein weiteres (erneutes) Mal ein Signal zur Suche von Weiterleitungswegen mit dem gleichen Kriterium des Weiterleitungsweges, so wird dies durch Vergleich mit den im jeweiligen Speicher abgelegten Daten festgestellt. Falls das empfangene Signal eine bessere Eignung als Weiterleitung ergibt, wird der entsprechende Absender dieses Signals als Vorgänger des Weiterleitungsweges in die Zuordnungsdaten übernommen.

Stellt eine Funktionseinheit fest (durch empfangene Kriterien sowie im jeweiligen Speicher abgelegte Zuordnungen), dass sie selbst eine angesprochene Datensenke ist, so wird ein Signal an die als Vorgänger im Speicher abgelegte Einheit versandt, welches eine Kennung enthält, dass der Empfänger als Weiterleitungsweg festgelegt wurde.

Im Ergebnis entsteht durch diese Vorgehensweise die Wirkung, dass selbstorganisierend ein Weiterleitungsweg (Pfad) zur beabsichtigten Datensenke (bzw. zu mehreren) erkannt und in den beteiligten Einheiten festgeschrieben wird, gleichzeitig dieser Weg optimiert ist und, etwa im Fall des Ausfalls einer an einem Weg beteiligten Einheit, jederzeit eine alternative Route durch Neuerzeugung des Weiterleitungsweges gebildet werden kann.

## Patentansprüche

1. Hausautomationsvorrichtung mit einer Mehrzahl von über Datenübertragungsmittel (14; 141-144) verbundenen und miteinander digitale Adress-, Befehls- und/oder Statussignale austauschenden Funktionseinheiten (10; 40, 50, 70,80, 90), die jeweils eine Aktoreneinheit (18) zur Durchführung vom mindestens einer Hausautomationsfunktionalität, insbesondere Steuerung einer Leuchtenvorrichtung (48) oder einer Beschattungsvorrichtung, durch manuelle Betätigung und/oder elektronische Ansteuerung einrichtbar aufweisen, wobei die Funktionseinheiten jeweils eine Vernetzungseinhelt (16) aufweisen, die so ausgebildet ist, dass die Funktionseinheiten mit leitungsgebundenen (141) und/oder drahtlosen (142-144) Kommunikationsvorrichtungen zum Austausch digitaler, durch ein Datenübertragungsprotokoll definierter Daten als Datenübertragungsmittel zusammenwirken können, eine jeweilige Vernetzungseinheit einer betreffenden Funktionseinheit mit ersten digitalen Adressdaten (XXXX) über die Datenübertragungsmittel ansteuerbar und eine jeweilige Aktoreneinheit einer betreffenden Funktionseinheit mit zweiten digitalen Adressdaten (YYY) ansteuer- und identifizierbar ist, **dadurch gekennzeichnet, dass** jede Vernetzungseinheit eine Adressübersetzungseinheit (32) aufweist, durch welche das Durchführen der Hausautomationsfunktionalität einer zugehörigen Aktoreneinheit mittels änderbar gespeicherter erster Zuordnungsdaten bestimmt wird, wobei die ersten Zuordnungsdaten über die Datenübertragungsmittel empfangene und/oder empfangbare Adressdaten mit den zweiten digitalen Adressdaten datenmässig verknüpfen, und jede Vernetzungseinheit Steuermittel (30) aufweist, die als Reaktion auf ein Ausgangssignal der Adressübersetzungseinheit eine Aktivierung einer zugehörigen Aktoreneinheit vornehmen,
wobei mindestens eine der Mehrzahl der Funktionseinheiten eine zur manuellen oder sensorgesteuerten Betätigung durch eine Bedienperson ausgebildete Betätigungseinheit (24) aufweist,
wobei die Betätigungseinheit (24) zum Zusammenwirken mit der Vernetzungseinheit so ausgebildet ist, dass als Reaktion auf eine Betätigung der Betätigungseinheit und/oder das externe Anlegen eines elektronischen Einrichtungs-Steuersignals erste Zuordnungsdaten für die Adressübersetzungseinheit (32) einer Vernetzungseinheit (16) einer anderen über die Datenübertragungsmittel angebundenen Funktionseinheit der Mehrzahl von Funktionseinheiten erzeugt werden.

2. Vorrichtung nach Anspruch 1, **gekennzeichnet durch** mindestens eine zusätzlich vorgesehene, die Vernetzungseinheit, jedoch keine Aktoreneinheit aufwelsende Tellnehmereinheit (12; 60).

3. Vorrichtung nach Anspruch 1 oder 2, **dadurch gekennzeichnet, dass** mindestens eine der Funktionseinheiten und/oder der Teilnehmereinheiten so ausgebildet ist, dass die Vernetzungseinheit modulartig mit spezifisch für leitungsgebundene und/oder drahtlose Datenübertragung über die Datenübertragungsmittel ausgebildeten Medienmodulen (44, 54, 64; 86, 76, 86, 98) aus-, auf- und nachrüstbar ist.

4. Vorrichtung nach Anspruch 3, **dadurch gekennzeichnet, dass** die Funktionseinheit und/oder die Teilnehmereinheit mit einer Mehrzahl von Medienmodulen (64,66), insbesondere für die leitungsgebundene und drahtlose Datenübertragung über die Datenübertragungsmittel, aus-, auf- und nachrüstbar ist.

5. Vorrichtung nach einem der Ansprüche 1 bis 4, **dadurch gekennzeichnet, dass** die Betätigungseinheit (24) zum unmittelbaren Auslösen der Hausautomationsfunktionalität einer betreffenden Aktoreneinheit ausgebildet ist.

6. Vorrichtung nach einem der Ansprüche 1 bis 5, **dadurch gekennzeichnet, dass** die Betätigungseinheit (24) zum Zusammenwirken mit der Vernetzungseinheit (16) so ausgebildet ist, dass als Reaktion auf eine Betätigung der Betätigungseinheit und/oder das externe Anlegen eines elektronischen Einrichtungs-Steuersignals erste Zuordnungsdaten für die Adressübersetzungseinheit (32) der zugehörigen Vernetzungseinheit (18) erzeugt werden.

7. Vorrichtung nach einem der Ansprüche 1 bis 6, **dadurch gekennzeichnet, dass** die Vernetzungseinheit (16) zum Senden eines die ersten sowie die zweiten Adressdaten aufweisenden Datenpakets mittels der Datenübertragungsmittel an andere der Mehrzahl von Funktionseinheiten als Reaktion auf ein Ausgangssignal der Adressübersetzungseinheit (32) ausgebildet ist.

8. Vorrichtung nach Anspruch 7, **dadurch gekennzeichnet, dass** die Vernetzungseinheit (16) so ausgebildet ist, dass sie für ein Senden des Datenpakets über eine leitungsgebundene Einheit (141) als Datenübertragungsmittel unspezifische erste Adressdaten oder erste Adressdaten eines Empfangspartners verwenden.

9. Vorrichtung nach Anspruch 7 oder 8, **dadurch gekennzeichnet, dass** die Vernetzungseinheit so ausgebildet ist, dass sie für ein Senden des Datenpakets über eine drahtlose Einheit (142 - 144) als Datenübertragungsmittel andere der Vernetzungseinheiten identifizierende erste Adressdaten verwenden.

10. Vorrichtung nach einem der Ansprüche 1 bis 9, **dadurch gekennzeichnet, dass** die Datenübertragungsmittel (14) sowohl eine drahtgebundene digitale Buseinheit (141) als leitungsgebundene Kommunikationsvorrichtung zur Verbindung von mindestens zwei Funktionseinheiten der Mehrzahl von Funktionseinheiten als auch eine digitale busartige Funkstrecke (142 144) als drahtlose Kommunikationsvorrichtung zur Verbindung von mindestens zwei Funktionseinheiten der Mehrzahl von Funktionseinheiten aufweisen.

11. Vorrichtung nach einem der Ansprüche 1 bis 10, **dadurch gekennzeichnet, dass** die Adressübersetzungseinheit (32) so ausgebildet ist, dass als Reaktion auf ein Empfangen erster und zweiter Adressdaten über die Datenübertragungsmittel ein Übertragen dieser ersten und zweiten Adressdaten an mindestens eine weitere der Mehrzahl von Funktionseinheiten durch die Vernetzungseinheit ausgelöst wird.

12. Vorrichtung nach Anspruch 11, **dadurch gekennzeichnet, dass** das Übertragen dieser ersten und zweiten Adressdaten an die mindestens eine weitere der Mehrzahl von Funktionseinheiten durch die Vernetzungseinheit als Reaktion auf zweite Zuordnungsdaten der Adressübersetzungseinheit erfolgt, die Adressdaten einer ersten Funktionseinheit als Empfangspartner mit Adressdaten einer zweiten Funktionseinheit als Versandpartner verknüpfen.

13. Vorrichtung nach Anspruch 12, **dadurch gekennzeichnet, dass** die zweiten Zuordnungsdaten Daten über die verwendeten Datenübertragungsmittel aufweisen und Im Fall einer drahtlosen Kommunikationsvorrichtung zusätzlich Kanalinformationen über einen verwendeten aus einer Mehrzahl von Funkübertragungskanälen und/oder informationen über eine gewählte Antenne, ein gewähltes Frequenzband und/oder einen gewählten Funkkanal aufweisen.

14. Vorrichtung nach Anspruch 12 oder 13, **dadurch gekennzeichnet, dass** erste und/oder zweite Zuordnungsdaten durch Wirkung der Steuermittel (30) als Reaktion auf eine manuelle Betätigung, spezifische elektronische Ansteuerung, eine festgestellte Übertragungsstörung der Datenübertragungsmittel und/oder eine Aktivierung oder Deaktivierung einer Funktionseinheit der Mehrzahl von Funktionseinheiten automatisch und dynamisch generiert, geändert und/oder ergänzt sowie in elektronischen Speichermitteln der Adressübersetzungseinheit abgelegt werden können.

15. Vorrichtung nach einem der Ansprüche 1 bis 14, **dadurch gekennzeichnet, dass** die Mehrzahl der über die Datenübertragungsmittel verbundenen Funktionseinheiten und/oder Tellnehmereinheiten 2 bis 255, bevorzugt 3 bis 64, beträgt

16. Vorrichtung nach einem der Ansprüche 1 bis 15, **dadurch gekennzeichnet, dass** die Mehrzahl von Funktionseinheiten in eine Mehrzahl von segmentartig mittels einer Router-Vorrichtung gekoppelter Einzelnetze unterteilt ist.

17. Vorrichtung nach einem der Ansprüche 1 bis 16, **dadurch gekennzeichnet, dass** die ersten digitalen Adressdaten eine maximale physikalische Datenlänge von 32 bit, die zweiten digitalen Adressdaten eine maximale physikalische Datenlänge von 18 Bit aufweisen.

18. Vorrichtung nach einem der Ansprüche 1 bis 17, **dadurch gekennzeichnet, dass** die Vernetzungseinheit (16) so ausgebildet ist, dass sie zusätzlich zu den ersten und zweiten Adressdaten eines Datenpakets ein digitales Signal entsprechend der Anzahl der Übertragungsschritte des Datenpakets zwischen aufeinanderfolgenden Funktionseinheiten seit einem ersten Versenden erzeugt und überträgt.

19. Vorrichtung nach Anspruch 18, **dadurch gekennzeichnet, dass** das der Anzahl der Übertragungsschritte entsprechende Signal zur Erzeugung der ersten und/oder zweiten Zuordnungsdaten, insbesondere durch Vergleich mit einem ersten Schwellwert, durch die Vemetzungseinheiten der aufeinanderfolgenden Funktionseinheiten ausgewertet wird.

20. Vorrichtung nach Anspruch 19, **dadurch gekennzeichnet, dass** der erste Schwellwert auf einen Wert kleiner 15, bevorzugt kleiner 11, eingestellt ist

21. Vorrichtung nach einem der Ansprüche 1 bis 20, **dadurch gekennzeichnet, dass** die Vernetzungseinheit (16) so ausgebildet ist, dass sie als Reaktion auf das Empfangen einer Mehrzahl von gleichartigen und/oder inhaltlich gleichwirkenden Datenpaketen von verschiedenen Versandpartnem Zuordnungsdaten in Abhängigkeit von einer zeitlichen Rangfolge des Empfanges dieser mehreren Datenpakete erzeugt und/oder eine einer Übertragungswegqualität entsprechende Kennung aus der zeitlichen Abfolge erzeugt.

22. Vorrichtung nach einem der Ansprüche 1 bis 21, **dadurch gekennzeichnet, dass** die Vernetzungseinheit (16) zum Erzeugen, Senden und/oder Empfangen eines Bestätigungssignals für eine von einer Aktoreneinheit durchgeführten Hausautomationsfunktionalität ausgebildet ist, wobei das Bestatigungssignal für eine gemeinsam gesteuerte Mehrzahl von Hausautomationsfunktionalitäten einer Mehrzahl von Funktionseinheiten einer auslösenden Funktionseinheit als Datenwert entsprechend der Anzahl der angesteuerten Funktionseinheiten übermittelt wird.

23. Vorrichtung nach einem der Ansprüche 1 bis 22, **dadurch gekennzeichnet, dass** die Funktionseinheiten in einem Gehäuse modulartig und bevorzugt zur Decken- und/oder Wandbefestigung in einem Gebäude ausgebildet sind.

24. Vorrichtung nach Anspruch 23, **dadurch gekennzeichnet, dass** das Gehäuse zur Auf- und/oder Unterputzmontage ausgebildet und bevorzugt so ausgestaltet ist, dass es in genormte, zur Steckdosen- oder Schaltermontage ausgestaltete Decken- und/oder Wandausnehmungen einsetzbar ist.

25. Vorrichtung nach einem der Ansprüche 1 bis 24, **dadurch gekennzeichnet, dass** mindestens eine der Funktionseinheiten netzspannungsunabhängig, insbesondere mit Batterie-, Solarstrom oder anderen netzungebundenen Quellen versorgbar ausgebildet ist.

26. Vorrichtung nach einem der Ansprüche 1 bis 25, **dadurch gekennzeichnet, dass** die Aktoreneinheit und/oder eine einer Aktoreneinheit zugeordnete Betätigungseinheit eine Sensorfunktionalität, insbesondere eine Bewegungs-, Geräusch-, Licht- und/oder Anwesenheitssensorfunktionalität, aufweist.

27. Verwendung der Vorrichtung nach einem der Ansprüche 1 bis 26 zur gemeinsamen Steuerung, insbesondere Aktivierung und/oder Deaktivierung, von Beleuchtungsvorrichtungen, Klima-, Heizungs-, Sicherheltstechnik-, Überwachung- und/oder Beschattungsvorrichtungen an voneinander entfernten Montagepositionen zugehöriger Funktionseinheiten der Mehrzahl von Funktionseinheiten durch Aktivierung und/oder Betätigung einer der Funktionseinheiten zugeordneten Sensor- und/oder Betätigungseinheit.

## Claims

1. Home automation facility having a plurality of functional units (10; 40, 50, 70, 80, 90) which are connected by way of data transmission means and which exchange digital address, command and/or status signals with each other, and each having an actuator unit (18) for carrying out at least one home automation function, in particular for controlling a luminaire device (48) or a shading device which can be adjusted by manual operation and/or electronic triggering, with each of the functional units having a networking unit (16) which is designed in such a way that the functional units can cooperate with grid-bound (141) and/or wireless (142-144) communication facilities as data transmission means for the purpose of exchanging digital data defined by a data transmission log, with each particular networking unit of a relevant functional unit with first digital address data (XXXX) capable of being triggered by way of the data transmission means, and with a particular actuator unit of a relevant functional unit with second address data (YYY) capable of being triggered and identified, **characterised in that** each networking unit has an address compiling unit (32) by means of which the execution of the home automation equipment functionality of a relative actuator unit is determined by means of variably stored first allocation data, whereby the first allocation data interconnects the address data received and/or receivable by way of the data transmission means with the second digital address data in data form, and with each networking unit having controlling means (30) which perform an activation of an associated actuator unit in response to an output signal of the address compiling unit,
for which purpose at least one of the plurality of functional units has an operating unit (24) designed to be actuated manually or in a sensor-controlled manner by an operating person,
with the operating unit (24) designed for the purpose of interacting with the networking unit in such a manner that, in response to an actuation of the operating unit and/or the external application of a device command signal, first allocation data are generated for the address compiling unit (32) of a networking unit (16) of another functional unit of the plurality of functional units that are linked by way of the data transmission means.

2. Facility according to Claim 1, **characterised by** at least one additionally provided subscriber unit (12; 60) having the networking unit, but not any actuator unit.

3. Facility according to Claim 1 or Claim 2, **characterised in that** at least one of the functional units and/or subscriber units is designed in such a manner that the networking unit can be equipped, upgraded and retrofitted in a modular fashion with media modules (44, 54, 64; 66, 76, 86, 96) which are specifically designed for the grid-bound and/or wireless transmission of data by way of the data transmission means.

4. Facility according to Claim 3, **characterised in that** the functional unit and/or the subscriber unit can be equipped, upgraded and retrofitted with a plurality of media modules (64, 66), in particular for the grid-bound and wireless transmission of data by way of the data transmission means.

5. Facility according to any of Claims 1 to 4, **characterised in that** the operating unit (24) is designed for directly triggering the home automation functionality of a relevant actuator unit.

6. Facility according to any of Claims 1 to 5, **characterised in that**, for the purpose of interacting with the networking unit (16), the operating unit (24) is designed in such a manner that first allocation data for the address compiling unit (32) of the associated networking unit (16) are generated in response to an actuation of the operating unit and/or the external application of an electronic device command signal.

7. Facility according to any of Claims 1 to 6, **characterised in that** the networking unit (16) is designed for sending a data packet with the first and the second address data by way of the data transmission means to others of the plurality of functional units in response to an output signal from the address compiling unit (32).

8. Facility according to Claim 7, **characterised in that** the networking unit (16) is designed in such a manner that it utilises unspecific first address data or first address data from a receiving partner as the data transmission means for sending the data packet by way of a grid-bound unit (141).

9. Facility according to Claim 7 or Claim 8, **characterised in that** the networking unit is designed in such a manner that it utilises other first address data identifying the networking units as the data transmission means for sending the data packet by way of a wireless unit (142 - 144).

10. Facility according to any of Claims 1 to 9, **characterised in that** the data transmission means (14) have both a grid-bound digital bus unit (141) as a line-bound communication device for connecting at least two functional units from the plurality of functional units, as well as a digital bus-like radio link (142 -144) as a wireless communication device for connecting at least two functional units from the plurality of functional units.

11. Facility according to any of Claims 1 to 10, **characterised in that** the address compiling unit (32) is designed in such a manner that, in response to receiving first and second address data by way of the data transmission means, a transmission of these first and second address data to at least one other of the plurality of functional units is triggered by the networking unit.

12. Facility according to Claim 11, **characterised in that** the transmission of these first and second address data to the at least one other of the plurality of functional units by the networking unit occurs in response to second allocation data from the address compiling unit which link the address data of a first functional unit as the receiving partner to address data of a second functional unit as the sending partner.

13. Facility according to Claim 12, **characterised in that** the second allocation data shows data relating to the utilised data transmission means and, in the case of wireless communication equipment, additional channel information relating to one of a plurality of radio transmission channels and/or information relating to a selected aerial, a selected frequency band and/or a selected radio channel being used.

14. Facility according to Claim 12 or Claim 13, **characterised in that** first and/or second allocation data can be automatically and dynamically generated, modified and/or supplemented and also filed in electronic storage media of the address transmission unit due to the effect of the controlling means (30) in response to a manual actuation, specific electronic triggering, a determined transmission fault in the data transmission means and/or an activation or deactivation of a functional unit of the plurality of functional units.

15. Facility according to any of Claims 1 to 14, **characterised in that** the plurality of functional units and/or subscriber units connected via the data transmission means amounts to 2 to 255, preferably 3 to 64.

16. Facility according to any of Claims 1 to 15, **characterised in that** the plurality of functional units is divided into a plurality of segment-like individual networks linked by way of a router device.

17. Facility according to any of Claims 1 to 16, **characterised in that** the first digital address data have a maximum physical data length of 32 bits, the second digital address data a maximum physical data length of 16 bits.

18. Facility according to any of Claims 1 to 17, **characterised in that** the networking unit (16) is designed in such a manner that, in addition to the first and second address data of a data packet, it generates and transmits a digital signal corresponding to the number of transmission steps by the data packet between consecutive functional units since the first transmission.

19. Facility according to Claim 18, **characterised in that** the signal for generating the first and/or second allocation data corresponding to the number of transmission steps, in particular by comparison with a first threshold value, is evaluated by the networking units of the consecutive functional units.

20. Facility according to Claim 19, **characterised in that** the first threshold value is set to a value that is less than 15, preferably less than 11.

21. Facility according to any of Claims 1 to 20, **characterised in that** the networking unit (16) is designed in such a manner that, in response to receiving from different dispatch partners a plurality of data packets that are similar and/or have a content with a similar effect, it generates allocation data depending on a time-related order of the receipt of this plurality of data packets and/or generates an identifier from the time-related sequence that corresponds to a transmission route quality.

22. Facility according to any of Claims 1 to 21, **characterised in that** the networking unit (16) is designed for generating, sending and/or receiving an acknowledgement signal for a home automation functionality carried out by an actuator unit, whereby the acknowledgement signal for a jointly controlled plurality of home automation functionalities of a plurality of functional units is transmitted to a triggering functional unit as a data value corresponding to the number of triggered functional units.

23. Facility according to any of Claims 1 to 22, **characterised in that** the functional units are of a modular design in a housing and preferably for fastening to the ceiling and/or wall in a building.

24. Facility according to Claim 23, **characterised in that** the housing is intended for surface or flush mounting and is preferably designed so that it can be utilised in standardised ceiling and/or wall recesses designed for the purpose of installing plug sockets or switches.

25. Facility according to any of Claims 1 to 24, **characterised in that** at least one of the functional units is designed to be independent of line voltage and is in particular capable of being fed with battery or solar energy or other network-independent sources.

26. Facility according to any of Claims 1 to 25, **characterised in that** the actuator unit and/or an operating unit allocated to an actuator unit, has a sensor functionality, in particular a movement, noise, light and/or detection sensor functionality.

27. Utilisation of the facility according to any of Claims 1 to 26 for the purpose of jointly controlling, in particular by activating and/or deactivating lumination equipment, air conditioning, heating, safety technology, monitoring and/or sun-shading equipment at installation positions of associated functional units of the plurality of functional units that are at a distance from each other, by activating and/or operating a sensor and/or operating unit allocated to one of the functional units.

## Revendications

1. Dispositif de domotique avec une pluralité d'unités fonctionnelles (10 ; 40, 50, 70, 80, 90) connectées par des moyens de transfert de données (14 ; 141-144) et échangeant entre elles des signaux numériques d'adresse, d'ordre et/ou d'état qui présentent respectivement une unité d'acteur (18) pour la réalisation d'au moins une fonctionnalité de domotique, en particulier la commande d'un dispositif d'éclairage (48) ou un dispositif d'ombrage par actionnement manuel et/ou amorçage électronique, ce faisant les unités fonctionnelles présentent respectivement une unité de mise en réseau (16) qui est ainsi formée que les unités fonctionnelles peuvent agir ensemble avec des dispositifs de communication par câble (141) et/ou sans fil (142-144) pour échanger des données définies par un protocole de transfert de données comme moyen de transfert de données, une unité de mise en réseau respective d'une unité fonctionnelle correspondante avec des premières données d'adresse numériques (XXXX) pouvant être commandée via les moyens de transfert de données et une unité d'acteur respective d'une unité fonctionnelle pouvant être commandée et identifiée avec des secondes données d'adresse numérique (YYY), **caractérisé en ce que** chaque unité de mise en réseau présente une unité de traduction d'adresse (32) par laquelle la réalisation de la fonctionnalité de domotique d'une unité d'acteur y affectée est déterminée au moyen de premières données d'affectation mémorisées de manière modifiable, ce faisant les premières données d'affectation relient, via les moyens de transfert de données, des données d'adresse reçues et/ou pouvant être reçues avec les secondes données d'adresse numériques, et chaque unité de mise en réseau présente des moyens de commande (30) qui réagissent à un signal de sortie de l'unité de traduction d'adresse en activant une unité d'acteur correspondante,
Ce faisant, au moins l'une des multiples unités fonctionnelles présente une unité d'actionnement (24), par un opérateur, configurée pour l'actionnement manuel ou commandée par capteur,
Ce faisant, l'unité d'actionnement (24) pour l'action combinée avec l'unité de mise en réseau est formée de telle sorte qu'en réaction à un actionnement de l'unité d'actionnement et/ou l'application externe d'un signal de commande d'installation électronique, sont générées de premières données d'affectation pour l'unité de traduction d'adresse (32) d'une unité de mise en réseau (16) d'une autre unité fonctionnelle reliée par les moyens de transfert de données de la pluralité des unités fonctionnelles.

2. Dispositif selon revendication 1, **caractérisé par** au moins une unité de mise en réseau supplémentaire, cependant unité de participant (12 ; 60) ne présentant pas d'unité d'acteur

3. Dispositif selon revendication 1 ou 2, **caractérisé en ce qu'**au moins une des unités fonctionnelles et/ou des unités de participants est configurée de telle sorte que l'unité de mise en réseau peut être dotée, équipée et modernisée avec des modules de média (44, 54, 64 ; 66, 76, 86, 96) configurés pour le transfert de données spécifiquement par câble et/ou sans fil via des moyens de transfert de données.

4. Dispositif selon revendication 3, **caractérisé en ce que** l'unité fonctionnelle et/ou l'unité de participant peut être dotée, équipée et modernisée avec une pluralité de modules de média (64, 66), en particulier pour le transfert de données par câble et/ou sans fil via les moyens de transfert de données

5. Dispositif selon l'une des revendications 1 à 4, **caractérisé en ce que** l'unité d'actionnement (24) est configurée pour le déclenchement direct de la fonctionnalité de domotique d'une unité d'acteur correspondante.

6. Dispositif selon l'une des revendications 1 à 5, **caractérisé en ce que** l'unité d'actionnement (24) pour l'action conjointe avec l'unité de mise en réseau (16) est configurée de telle sorte qu'en réaction à un actionnement de l'unité d'actionnement et/ou à l'application externe d'un signal de commande d'équipement électronique, sont générées des premières données d'affectation pour l'unité de traduction d'adresse (32) de l'unité de mise en réseau y relative (16).

7. Dispositif selon l'une des revendications 1 à 6, **caractérisé en ce que** l'unité de mise en réseau (16) est configurée pour l'envoi d'un paquet de données présentant les premières ainsi que les secondes données d'adresse à l'aide des moyens de transfert de données à d'autres de la pluralité des unités fonctionnelles en réaction à un signal de sortie de l'unité de traduction d'adresse (32).

8. Dispositif selon la revendication 7, **caractérisé en ce que** l'unité de mise en réseau (16) est configurée de telle sorte qu'elle utilise pour l'envoi du paquet de données via une unité par câble (141) comme moyen de transfert de données des premières données d'adresse non spécifiques ou des premières données d'adresse d'un partenaire destinataire.

9. Dispositif selon la revendication 7 ou 8, **caractérisé en ce que** l'unité de mise en réseau est configurée de telle sorte qu'elle utilise pour l'envoi du paquet de données via une unité sans fil (142 - 144) comme moyen de transfert de données d'autres premières données d'adresse identifiant les unités de mise en réseau.

10. Dispositif selon l'une des revendications 1 à 9, **caractérisé en ce que** les moyens de transfert de données (14) présentent aussi bien une unité bus numérique filaire (141) comme dispositif de communication par câble pour la connexion d'au moins deux unités fonctionnelles de la pluralité d'unités fonctionnelles qu'une liaison radio de type bus numérique (142 - 144) comme dispositif de communication sans fil pour la connexion d'au moins deux unités fonctionnelles de la pluralité d'unités fonctionnelles.

11. Dispositif selon l'une des revendications 1 à 10, **caractérisé en ce que** l'unité de traduction d'adresse (32) est configurée de telle sorte que, en réaction à la réception de premières et secondes données d'adresse via les moyens de transfert de données, un transfert de ces premières et secondes données d'adresse à au moins une autre de la pluralité des unités fonctionnelles est déclenché par l'unité de mise en réseau.

12. Dispositif selon la revendication 11, **caractérisé en ce que** le transfert de ces premières et secondes données d'adresse à au moins une autre de la pluralité des unités fonctionnelles est effectué via l'unité de mise en réseau en réaction aux secondes données d'affectation de l'unité de traduction d'adresse, qui relient les données d'adresse d'une première unité fonctionnelle, en tant que partenaire destinataire à des données d'adresse d'une seconde unité fonctionnelle, en tant que partenaire expéditeur.

13. Dispositif selon la revendication 12, **caractérisé en ce que** les secondes données d'affectation présentent des données sur les moyens de transfert de données utilisés et, en cas de dispositif de communication sans fil, de plus des informations sur le canal via un canal utilisé parmi une pluralité de canaux de transfert par radio et/ou des informations sur l'antenne sélectionnée, une bande de fréquence choisie et/ou un canal radio sélectionné.

14. Dispositif selon la revendication 12 ou 13, **caractérisé en ce que** des premières et/ou secondes données d'affectation par action du moyen de commande (30) en réaction à un actionnement manuel peuvent générer, modifier et/ou compléter automatiquement et dynamiquement une excitation électronique spécifique, un parasitage de transfert constaté des moyens de transfert de données et/ou une activation ou désactivation d'une unité fonctionnelle de la pluralité d'unités fonctionnelles ainsi qu'être sauvegardées dans des mémoires électroniques de l'unité de traduction d'adresse.

15. Dispositif selon la revendication 1 à 14, **caractérisé en ce que** la pluralité des unités fonctionnelles reliées via les moyens de transfert de données et/ou des unités de participants est comprise entre 2 et 255, de préférence 3 à 64.

16. Dispositif selon la revendication 12 à 15, **caractérisé en ce que** la pluralité des unités fonctionnelles est segmentée en une pluralité de réseaux individuels accouplés au moyen d'un dispositif à routeur.

17. Dispositif selon la revendication 12 à 16, **caractérisé en ce que** les premières données d'adresse numériques présentent une longueur de donnée physique maximale de 32 bit, les secondes données d'adresse numériques une longueur physique maximale de 16 bit.

18. Dispositif selon la revendication 1 à 17, **caractérisé en ce que** l'unité de mise en réseau (16) est configurée de telle sorte qu'elle génère et transfère, en sus des premières et secondes données d'adresse d'un paquet de données, un signal numérique correspondant au nombre de pas de transfert du paquet de données entre des unités fonctionnelles successives depuis un premier envoi.

19. Dispositif selon la revendication 18, **caractérisé en ce que** le signal correspondant au nombre de pas de transfert est évalué pour générer les premières et/ou les secondes données d'affectation, en particulier par comparaison avec une première valeur seuil, par les unités de mise en réseau des différentes unités fonctionnelles successives.

20. Dispositif selon la revendication 19, **caractérisé en ce que** la première valeur seuil est réglée sur une valeur inférieure à 15, de préférence inférieure à 11.

21. Dispositif selon l'une des revendications 1 à 20, **caractérisé en ce que** l'unité de mise en réseau (16) est configurée de telle sorte qu'elle génère, en réaction à la réception d'une pluralité de paquets de données de même nature et/ou dont le contenu a le même effet de différents partenaires expéditeurs, des données d'affectation en fonction d'un ordre chronologique de la réception de ces multiples paquets de données et/ou une identification correspondant à la qualité de la voie de transfert à partir de la chronologie.

22. Dispositif selon l'une des revendications 1 à 21, **caractérisé en ce que** l'unité de mise en réseau (16) est configurée de manière à générer, envoyer et/ou recevoir un signal de confirmation pour une fonctionnalité de domotique réalisée par une unité d'acteur, ce faisant, le signal de confirmation est transmis pour une pluralité, commandée en commun, de fonctionnalités de domotique d'une pluralité d'unités fonctionnelles d'une unité fonctionnelle assurant le déclenchement comme valeur de donnée correspondant au nombre d'unités fonctionnelles excitées.

23. Dispositif selon l'une des revendications 1 à 22, **caractérisé en ce que** les unités de mise en réseau sont configurées dans un boîtier de type modulaire, de préférence pour une fixation au plafond et/ou au mur dans un bâtiment.

24. Dispositif selon la revendication 23, **caractérisé en ce que** le boîtier est prévu pour le montage encastré et/ou en saillie et doit être configuré, de préférence, de telle sorte qu'il puisse être utilisé pour le montage dans des évidements de plafond et/ou de mur normalisés prévus pour le montage de prises ou d'interrupteurs.

25. Dispositif selon l'une des revendications 1 à 24, **caractérisé en ce qu'**au moins l'une des unités fonctionnelles est configurée pour une alimentation indépendante de la tension du réseau, en particulier par pile, énergie solaire ou d'autres sources indépendantes du réseau.

26. Dispositif selon l'une des revendications 1 à 25, **caractérisé en ce que** l'unité d'acteur et/ou une unité d'actionnement affectée à une unité d'acteur présente une fonctionnalité de capteur, en particulier une fonctionnalité de mouvement, de bruit, de lumière et/ou de présence.

27. Utilisation du dispositif selon l'une des revendications 1 à 26 pour la commande commune, en particulier d'activation et/ou de désactivation de dispositifs d'éclairage, de climatisation, de chauffage, de technique de sécurité, de surveillance et/ou d'ombrage sur des positions de montage éloignées les unes des autres d'unités fonctionnelles y relatives de la pluralité d'unités fonctionnelles, par activation et/ou actionnement d'une unité à capteur et/ou unité de mouvements affectée à l'une des unités fonctionnelles
